# EUROPEAN PATENT SPECIFICATION

(11) **EP 3 157 782 B1**
(45) Date of publication and mention of the grant of the patent: **17.04.2019**
(21) Application number: 15742077.9
(22) Date of filing: 19.06.2015
(51) Int. Cl.: B60R 1/00

(54) **BACK VISION SYSTEM FOR ASSISTING VEHICLE DRIVING**
RÜCKBLICKSYSTEM ZUR UNTERSTÜTZUNG DER LENKUNG EINES FAHRZEUGS
SYSTEME DE RETROVISION POUR AIDER A LA CONDUITE D'UN VEHICULE

(30) Priority: 19.06.2014 IT MI20141114
(43) Date of publication of application: 26.04.2017
(73) Proprietor: Iveco S.p.A., 10156 Torino (IT)
(72) Inventor: FINOTELLO, Roberto, I-10156 Torino (IT); VARRASSO, Maddalena, I-10156 Torino (IT)
(74) Representative: Fiume, Orazio
(86) International application number: PCT/IB2015/054629
(87) International publication number: WO 2015/193851

(56) References cited:
- EP-A2- 2 288 533
- WO-A1-2004/035352
- WO-A1-2006/022630
- DE-A1-102010 020 201
- JP-A- H1 123 305
- US-A1- 2005 030 379

## Description

### Field of the invention

The present invention relates to the field of systems for assisting vehicle driving and in particular to a back vision system for assisting vehicle driving.

### Background art

In the vehicle driving field many systems that facilitate the driving of vehicles and helps the driver to effectively monitor the perimeter of the vehicle have been implemented.

For example, as described in EP2288533 a lane change assist system which provides monitoring the vehicle side lanes so as to discourage a lane change which could potentially lead to a collision with other vehicles arriving from behind.

A haptic reaction module alerts the driver, according to the solution described in EP2288533.

Solutions wherein the outside rearview mirrors are replaced by side cameras are also known.

Reverse assist systems that provide implementing a central back camera are also known.

US2005030379 discloses a system visor arranging cameras views on the basis of a GPS signal.

WO 2004/035352 A1 discloses a back vision system for assisting vehicle driving according to the preamble of claim 1.

### Summary of the invention

The object of the present invention is to propose a back vision system for assisting vehicle driving suited to stimulate the driver's attention when specific events occurs. This is achieved with a back vision system having the features of claim 1 and a back vision method having the features of claim 6. Dependent claims describe preferred alternatives of the invention.

The present invention finds particular application in commercial vehicles for the distribution of goods in urban areas, in the presence of the so-called vulnerable road users, i.e. pedestrians, cyclists and motorcyclists.

Therefore, the present invention is of great help for the driver of a vehicle generally used in urban areas, even in heavy traffic conditions.

### Brief description of the figures

Further purposes and advantages of this invention will become clear from the following detailed description of an embodiment thereof (and alternatives of the same) and the annexed drawings given purely by way of explanatory and non limiting example, wherein:
in figure 1 an embodiment of a part of the back vision system for assisting vehicle driving, object of the present invention, is indicated;
in Figure 2 a top view of a vehicle provided with the vision system of Figure 1, with reference to another part of the same system is shown
in Figures 3a - 3e favorite implementing examples of the operation of the system according to the Figures 1 and 2 are shown,
in Figures 4 a top view of an element of the system shown in Figure 1 is shown and
in Figures 5a and 5b implementing details of the fastening of the element shown in Figure 4 are shown.

The same numbers and the same reference letters in the figures identify the same elements or components.

In the present description the term "second" component does not imply the presence of a "first" component. These terms are in fact used only for clarity and are not intended to be limitative.

### Detail description of embodiments

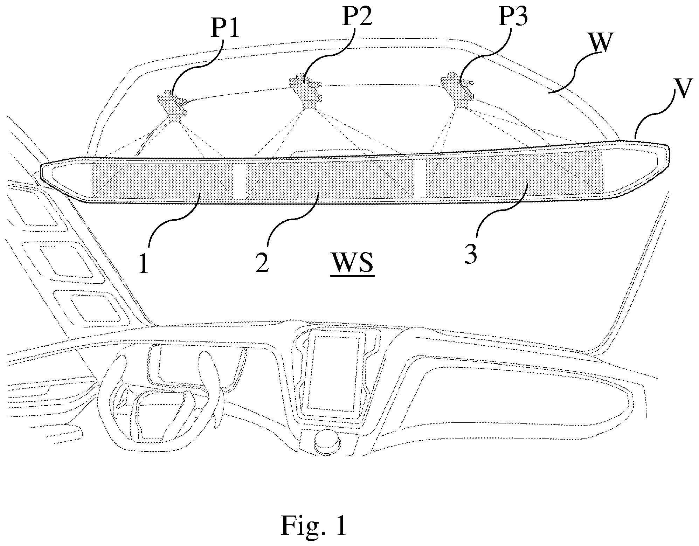

In figure 1 a vehicle display V is shown, having a longitudinal shape that is housed inside the vehicle cabin, connected to an inner wall W, adjacent at the upper part to the vehicle windshield WS and defining a front portion of the vehicle cabin.

The display V has a preferably flat surface adapted to display images or adapted to cooperate in the projection of images.

According to a preferred alternative of the invention, said display V can translate vertically or may follow another trajectory, for example parallel to the wall W and/or to the vehicle windshield WS. In said circumstances, not only is it possible to place the display V in an optimal shooting position for the driver, but it may also be used as sun shield.

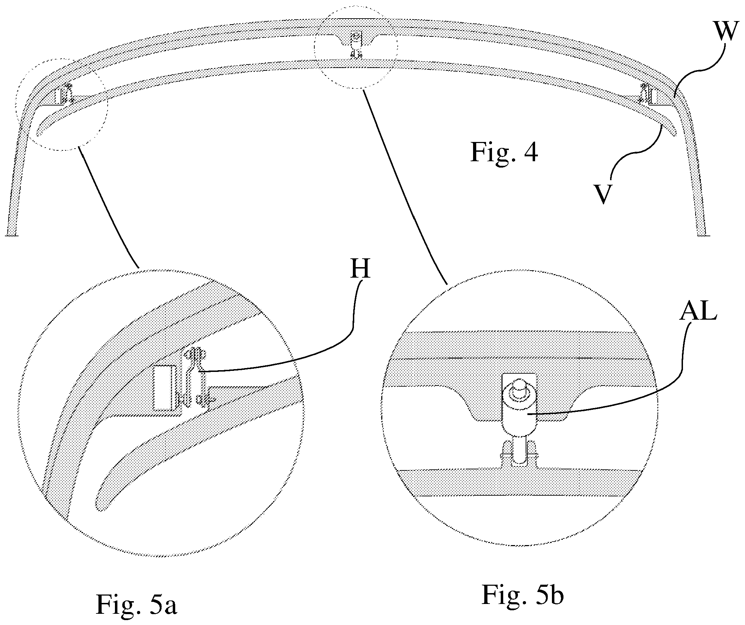

In figure 4 a top view of the display V is shown. Preferably, the display extends symmetrically from side to side of the vehicle cabin, having a curvature complementary to the inner shape of the wall W.

It is possible to provide that the display has a lesser extension than the internal width in the vehicle cabin and that it can be arranged non- symmetrically inside the cabin. For example it can be centered on the location of the driver.

In Figure 1 three projectors P1, P2, P3 are shown suited to project on the display V what is viewed by the corresponding cameras C1, C2, C3.

The projection area 1 corresponds to what has been viewed by the side camera C1, the projection area 2 corresponds to what is viewed by the central camera C2, and the projection area 3 corresponds to what is viewed by the side camera C3.

Thus on the display V a fairly complete projection of what is happening behind the vehicle VH is provided.

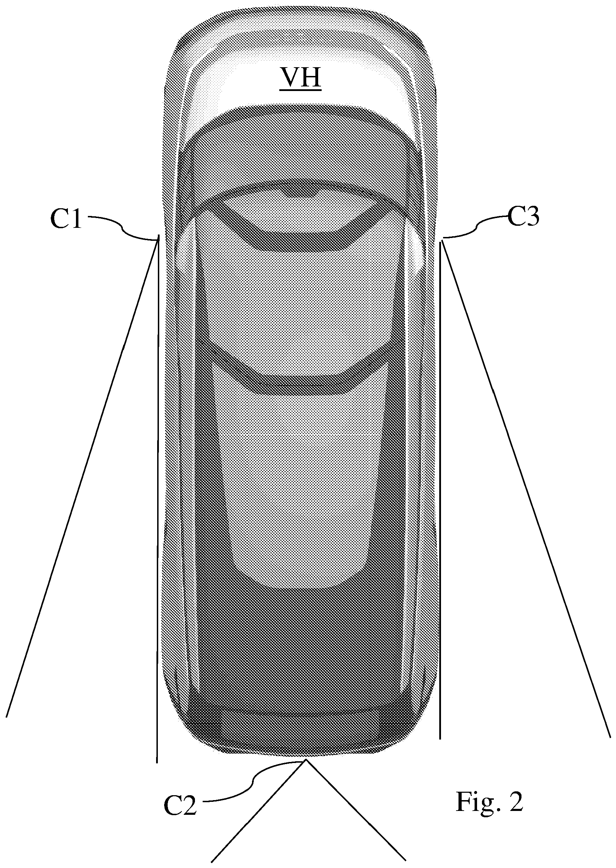

In figure 2 a top view of a vehicle VH implementing the present system is shown highlighting the points and angles of the cameras C1, C2 and C3.

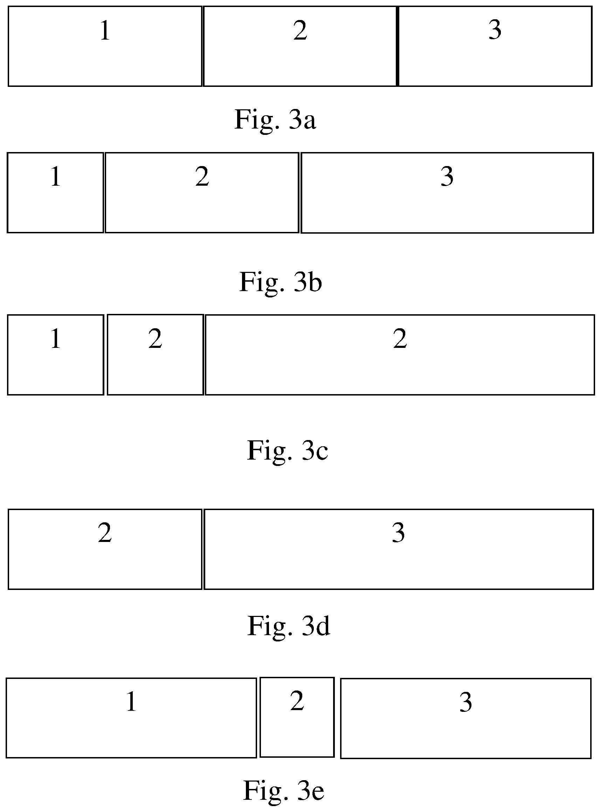

With reference to Figure 3a three projection areas 1, 2, 3 projected on the display V are schematically shown contiguous from the left, the projection area 1, from the right, the projection area 3.

A first operating condition provides that the vehicle proceeds along a road, without having to turn left or right in the near future. In said first operating condition the three areas have equal dimensions.

Below it will be explained what is meant by "without having to turn immediately."

According to a second operating condition of the projection system, that is, as a result of one or more predefined events, the projection areas 1, 2 and 3 have different dimensions from each other, and in particular the projection area corresponding to the turning direction that the vehicle is about to make is magnified.

In Figures 3b - 3d three preferred magnification alternatives of the projection area 3, corresponding to a right turn of the vehicle VH are shown.

In the first alternative of figure 3b, the right projection area is magnified by about 150%, the central projection area 2 does not undergo substantial dimension variation, but results shifted to the left of the display, while the left projection area 1 is reduced by about 50%.

In the second alternative of Figure 3c, the projection area on the right is magnified by about 200%, the central projection area 2 is reduced by 50% and is shifted to the left of the display, and also the left projection area 1 is reduced by about 50%.

In the third alternative of Figure 3d, the projection area on the right is magnified by about 200%, the central projection area 2 does not undergo substantial dimension variation, but results shifted to the left of the display, while the left projection area is not present.

It is important to note that the percentages expressed herein are merely examples and that the scaling or deletion of the projection areas 1 and 2 is not mandatory.

According to the alternatives shown in Figures 3b - 3d the projection areas remain substantially adjacent, horizontally side by side, and preferably contiguous with each other as in the first operating condition shown in figure 3a. The projection area opposite of the turning point can be removed and/or reduced, while the central area may be left unmodified or reduced.

It is worth noting that "magnify" signifies that a projection area increases horizontally, but it also may be provided that it increases vertically.

Furthermore, it is preferable but not mandatory to keep a minimum separation of, for example, 0.5 centimeters, between the projection areas.

According to the invention, the second operating condition is triggered by a satellite navigation system signaling a call to turn or to change lane.

Other events can combine with the signal of a satellite navigation system to trigger the second operating condition of the system as activation of a turn signal by the driver or the exceeding of a predetermined steering angle.

It is known that satellite navigation systems send alert messages to the driver so that the latter can prepare to turn as the vehicle approaches the programmed turning point.

Another event that combine with the signal of a satellite navigation system to trigger said second operating mode may consist in detecting a further vehicle approaching from behind. Said detection can be carried out by a suitable recognition software associated with the abovementioned back camera system or by proximity, laser or ultrasound sensors among others.

The second operating condition described above can, therefore, be activated by one of said alert messages.

Now it is clear what "without having to turn immediately" is meant. It is obvious that a vehicle, sooner or later have to turn, but the vision system, by itself, would have no way to know when the vehicle will turn. Therefore, an event that certainly is a prelude to a turning is an activation of a turn signal by the driver or by steering exceeding a predetermined angle, possibly in conjunction with the activation of the brakes.

According to the invention, when a route is set in the satellite navigation system, the present back projection system cooperate with the satellite navigation system, by means of appropriate data interface, to signal the driver the approaching of a turning condition or lane change condition, etc.

It is known that satellite navigation systems send alert messages to the driver, according to the established criteria. In some cases it is expected that the driver is pre-alerted for a couple of times and then asked to turn at the most appropriate time.

According to a preferred alternative of the present invention, examples of the second operating condition shown by way of the figures 3b - 3d are selected in relation to the greater proximity to the turning position. For example, at the first alert message, the vision system modifies the projection areas 1, 2 and 3 according to the embodiment of Figure 3b. For example, at the second alert message, the vision system modifies the projection areas 1, 2 and 3 according to the alternative of Figure 3c. For example, at the turning point, the vision system modifies the projection areas 1, 2 and 3 according to Figure 3d.

It is worth highlighting that the above described in relation to the turning condition, can be performed also in relation to a lane change.

According to a preferred alternative of the invention, which is combined with the previous alternatives, the modification of Figure 3c or 3b can be confirmed when the driver activates a turn signal. Instead the modification of Figure 3c or 3d can be confirmed when the driver starts to brake and/or starts to steer.

Advantageously, the fact of magnifying the projection area corresponding to the turn direction allows to better monitor the vehicles and/or vulnerable road users which may arrive from behind on the same turning side thus avoiding a collision.

Preferably, once the vehicle has performed the turning or has ended the side approaching or lane change operations, the projection system restores the first operating condition shown in figure 3a, i.e. in which the projection areas have equal dimensions between each other.

According to an example of s implementation shown in Figure 1, a projector P1 illuminates the side projection area 1, the projector P2 illuminates the central projection area 2, and the projector P3 illuminates the side projection area 3.

This does not exclude that the display V can integrate a LCD or LED display, thus eliminating the need to use projectors.

In addition to above-described magnification effect of the projection areas, other additional signaling forms by means of the display V can also be provided. For example, a blinking of one or more of said projection areas can be caused by reaching a destination or an intermediate step of a broader and articulated route, then the first condition of Figure 3a is reset.

Said blinking condition can be combined with the above magnification condition.

For example, if the vehicle is provided with the lane change assist system described in EP2288533 the second operating condition can be triggered upon detection of a third vehicle approaching from behind in one of the lanes immediately adjacent to the lane engaged by the vehicle VH. Furthermore, the magnification degree may vary in relation to the distance of the vehicle from the third vehicle VH in a similar way to the approaching of a turning or pulling-over position.

For example a blinking of one or more of said projection areas can be activated alternatively or in cooperation with the activation of haptic module described in EP2288533.

Subsequently, if there are no more arriving vehicles from behind, the first operating condition shown in Figure 3a is restored.

Figure 3e shows a third operating condition which, according to a preferred embodiment of the present invention can occur when, once implemented the system described in EP2288533, two third vehicles would arrive from behind, the one in the right lane immediately adjacent to the lane engaged by the vehicle VH and the other in the left lane immediately adjacent to the lane engaged by the vehicle VH. Subsequently, as the third vehicles is passed, if the conditions subsist, the first operating condition is reset.

According to a preferred implementation of the display V, the latter comprises a linear actuator AL, for example of the electric type, having a first end hinged to the wall W and a second end, opposite to the first hinged to the display V so as to allow a translation of the display V, so that the display would remain parallel to itself.

Preferably, the linear actuator acts on a middle portion of the display, while the ends of the display are associated to the side walls of the cabin by means of slides or articulated hinges H.

According to another preferred alternative of the invention the AL component is a shock absorbing piston, while the activation of the display is obtained by means of the motorization of the articulated hinges H arranged on opposite ends of the display V.

Combinations may also be provided of the preceding alternatives, in which, for example, a motorized hinge is arranged centrally and two pistons are arranged at the ends of the display.

This projection system, from the hardware point of view comprises substantially the display V, possibly the projectors P1, P2, P3, the cameras C1, C2 and C3 while the operational conditions described can be implemented in any vehicle processing unit.

The detection of the activation of a turn signal and/or the detection of the steering exceeding a predetermined angle and/or the detection of the activation of the brakes, etc. can be obtained by reading the CAN messages of the road vehicular data network. Therefore, the present invention is, nowadays, of simple implementation, especially if the interface between the vision system and vehicle functions is obtained by the CAN network.

The present invention can be advantageously obtained by a computer program that comprises code means for obtaining one or more steps of the method, when this program is run on a computer. Therefore, it is intended that the scope of protection extends to said computer program and furthermore to computer-readable means that comprise a recorded message, said computer-readable means comprising program code means for obtaining one or more steps of the method when said program is run on a computer.

From the above description the skilled in the art is able to produce the object of the invention without introducing any further construction details.

## Claims

1. Back vision system for assisting vehicle driving (VH) comprising
- at least three cameras (C1, C2, C3) pointing to the back of the vehicle (VH) : a left side camera (C1), a central camera (C2) and a right back camera (C3),
- a display (V) having a longitudinal shape adapted to display at least three projection areas (1, 2, 3) placed side by side horizontally and corresponding to as many shootings of said at least three cameras (C1, C2, C3),
- processing means configured to keep the reciprocal dimensions of said projection areas equal between each other according to a first operating condition and to modify said reciprocal dimensions of said projection areas, in order to have different dimensions from each other, according to a second operating condition;
the system being **characterized in** comprising interface means to a vehicle navigation system, the navigation system comprising means for signalling the approaching to a turning position or to a lane change and **in that** said processing means are adapted to activate at least said second operating condition when said signalling means are activated.

2. System according to claim 1, further comprising interface means to a vehicular data network to detect an activation of a turn signal and/or of a steering exceeding a predetermined angle and/or an activation of the vehicle brakes and wherein said processing means are adapted to activate said second operating condition when a turn signal is activated and/or the steering exceeds a predetermined angle and/or the vehicle brakes are activated.

3. System according to claim 1 or 2, wherein said modification comprises a magnification of a display area corresponding to a turn direction or to a side approaching or to lane change of the vehicle (VH).

4. System according to claim 1, wherein said processing means are configured to make one or more of said projection areas (1 - 3) blink when one destination is considered as reached by said vehicle navigation system.

5. System according to one of the claims 1 to 3, further comprising a lane change assist system comprising means for monitoring immediately adjacent lateral lanes and means for discouraging/preventing a lane change when one or more other vehicles are arriving from behind and wherein said vision system comprises interface means to said lane change assist system and wherein said processing means are configured to generate a magnification and/or a blinking of one or both said lateral projection areas (1, 3) when said means for discouraging/preventing a lane change are activated.

6. Back vision method for assisting vehicle driving (VH) by means of a rear vision system according to one of the claims 1 to 5, comprising the following steps
- back shootings by means of said at least three cameras (C1, C2, C3),
- display of at least three projection areas (1, 2, 3) placed side by side horizontally and corresponding to as many shootings of said at least three cameras (C1, C2, C3),
- control of said projection so as to keep reciprocal dimensions of said projection areas (1 - 3) equal to each other according to a first operating condition and
- control of said projection so as to modify said reciprocal dimensions of said projection areas in order to have different dimensions from each other, according to a second operating condition,
wherein said second operating condition is activated by receiving signals from a vehicle navigation system, signalling the approaching to a turning position or to a lane change.

7. Method according to claim 6, wherein said second operating condition is further activated by at least one of the following conditions:
- activation of a turn signal by the driver,
- exceeding of a predetermined steering angle, preferably in combination with an activation of the vehicular brakes.

8. Computer program comprising program code means adapted to carry out all the steps of one of the claims 6 or 7, when such program is run on a computer.

9. Computer-readable means comprising a recorded program, said computer-readable means comprising program code means adapted to carry out all the steps of one of the claims 6 or 7, when said program is run on a computer.

10. Terrestrial vehicle comprising a back vision system for assisting vehicle driving (VH) according to any one of the claims 1 to 5.

## Patentansprüche

1. Rückblicksystem zur Unterstützung der Lenkung eines Fahrzeugs (VH), umfassend:
- zumindest drei Kameras (C1, C2, C3), die zum Heck des Fahrzeugs (VH) gerichtet sind: eine linke Kamera (C1), eine mittlere Kamera (C2) und eine rechte Kamera (C3),
- eine Anzeige (V) mit einer länglichen Form, vorgesehen zur Anzeige von zumindest drei Projektionsbereichen (1, 2, 3), die horizontal nebeneinander angeordnet sind und ihrer Zahl den Aufnahmen der zumindest drei Kameras (C1, C2, C3) entsprechen,
- Verarbeitungsmittel, dazu ausgebildet, die gegenseitigen Abmessungen der Projektionsbereiche entsprechend einer ersten Betriebsbedingung untereinander gleichzuhalten, und die gegenseitigen Abmessungen der Projektionsbereiche entsprechend einer zweiten Betriebsbedingung derart zu modifizieren, dass sie voneinander abweichende Abmessungen aufweisen,
welches System **dadurch gekennzeichnet ist, dass** es Schnittstellen zu einem Fahrzeug-Navigationssystem umfasst, welches Navigationssystem Mittel zur Signalisierung des Annäherns zu einer Abbiegeposition oder eines Spurwechsels umfasst, sowie dadurch, dass die Verarbeitungsmittel dazu vorgesehen sind, zumindest die zweite Betriebsbedingung zu aktivieren, wenn die Signalisierungsmittel aktiviert sind.

2. System gemäß Anspruch 1, ferner umfassend Schnittstellenmittel zu einem Fahrzeug-Datennetzwerk zur Detektion einer Aktivierung eines Abbiegesignals und/oder eines Überschreitens eines vorbestimmten Winkels durch die Steuerung und/oder eine Aktivierung der Fahrzeugbremsen, wobei die Verarbeitungsmittel dazu ausgebildet sind, den zweiten Betriebszustand zu aktivieren, wenn ein Abbiegesignal aktiviert ist und/oder die Steuerung einen vorbestimmten Winkel überschreitet und/oder die Fahrzeugbremsen aktiviert sind.

3. System gemäß Anspruch 1 oder 2, bei welchem die Modifikation eine Vergrößerung des Anzeigebereichs entsprechend einer Abbiegerichtung oder einer sich nähernden Seite oder einem Spurwechsel des Fahrzeugs (VH) umfasst.

4. System gemäß Anspruch 1, bei welchem die Bearbeitungsmittel dazu ausgebildet sind, einen oder mehrere Projektionsbereiche (1-3) blinken zu lassen, wenn ein Ziel vom Fahrzeug-Navigationssystem als erreicht betrachtet wird.

5. System gemäß einem der Ansprüche 1 bis 3, ferner umfassend ein Spurwechsel-Assistenzsystem, umfassend Mittel zur Überwachung unmittelbar benachbarter seitlicher Spuren und Mittel zur Behinderung/Verhinderung eines Spurwechsels, wenn eines oder mehrere weitere Fahrzeuge sich von hinten nähern, wobei das Blicksystem Schnittstellenmittel zu dem Spurwechsel-Assistenzsystem umfasst, wobei die Verarbeitungsmittel dazu ausgebildet sind, eine Vergrößerung und/oder ein Blinken von einem oder beiden seitlichen Projektionsbereichen (1, 3) zu erzeugen, wenn die Mittel zur Behinderung/Verhinderung eines Spurwechsels aktiviert sind.

6. Rückblickverfahren zur Unterstützung der Lenkung eines Fahrzeugs (VH) durch ein Rückblicksystem gemäß einem der Ansprüche 1 bis 5, umfassend die folgenden Schritte:
- Rückblickaufnahmen mittels der zumindest drei Kameras (C1, C2, C3),
- Anzeige von zumindest drei Projektionsbereichen (1, 2, 3), die nebeneinander horizontal angeordnet sind und in ihrer Anzahl den Aufnahmen der zumindest drei Kameras (C1, C2, C3) entsprechen,
- Steuerung der Projektion, derart, dass gegenseitige Abmessungen der Projektionsbereiche (1-3) entsprechend einer ersten Betriebsbedingung zueinander gleich gehalten werden, und
- Steuerung der Projektion, derart, dass die gegenseitigen Abmessungen der Projektionsbereiche entsprechend einer zweiten Betriebsbedingung derart modifiziert werden, dass sie unterschiedliche Abmessungen voneinander aufweisen,
wobei die zweite Betriebsbedingung aktiviert wird durch Empfang von Signalen von einem Fahrzeug-Navigationssystem, welche das Annähern an eine Abbiegeposition oder einen Spurwechsel signalisieren.

7. Verfahren gemäß Anspruch 6, bei welchem die zweite Betriebsbedingung ferner durch zumindest eine der folgenden Bedingungen aktiviert wird:
- Aktivierung eines Abbiegesignals durch den Fahrer,
- Überschreiten eines vorbestimmten Steuerungswinkels, vorzugsweise in Kombination mit einer Aktivierung der Fahrzeugbremsen.

8. Computerprogramm, umfassend Programmcodemittel, ausgebildet zur Ausführung aller Schritte von einem der Ansprüche 6 oder 7, wenn ein solches Programm auf einem Computer ausgeführt wird.

9. Computerlesbare Mittel, umfassend ein aufgezeichnetes Programm, welche computerlesbare Mittel Programmcodemittel umfassen, vorgesehen zur Ausführung aller Schritte aus einem der Ansprüche 6 oder 7, wenn das Programm auf einem Computer ausgeführt wird.

10. Landfahrzeug, umfassend ein Rückblicksystem zur Unterstützung der Lenkung eines Fahrzeugs (VH) gemäß einem der Ansprüche 1 bis 5.

## Revendications

1. Système de rétrovision pour aider à la conduite d'un véhicule (VH) comprenant
- au moins trois caméras (C1, C2, C3) pointant vers l'arrière du véhicule (VH) : une caméra côté gauche (C1), une caméra centrale (C2) et une caméra arrière droite (C3),
- une unité d'affichage (V) de forme longitudinale adaptée pour afficher au moins trois zones de projection (1, 2, 3) placées côte à côte horizontalement et correspondant à autant de prises de vue desdites au moins trois caméras (C1, C2, C3),
- des moyens de traitement configurés pour maintenir les dimensions mutuelles desdites zones de projection égales entre elles selon une première condition de fonctionnement et pour modifier lesdites dimensions mutuelles desdites zones de projection, afin d'obtenir des dimensions différentes les unes des autres, selon une seconde condition de fonctionnement ;
le système étant **caractérisé en ce qu'**il comprend des moyens d'interface avec un système de navigation de véhicule, le système de navigation comprenant des moyens pour signaler l'approche d'une position de virage ou d'un changement de voie
et **en ce que** lesdits moyens de traitement sont adaptés pour activer au moins ladite seconde condition de fonctionnement lorsque lesdits moyens de signalement sont activés.

2. Système selon la revendication 1, comprenant en outre des moyens d'interface avec un réseau de données de véhicule pour détecter une activation d'un signal de virage et/ou d'un braquage excédant un angle prédéterminé et/ou une activation des freins du véhicule et dans laquelle lesdits moyens de traitement sont adaptés pour activer ladite seconde condition de fonctionnement lorsqu'un signal de virage est activé et/ou que le braquage excède un angle prédéterminé et/ou que les freins du véhicules sont activés.

3. Système selon la revendication 1 ou 2, dans laquelle ladite modification comprend un agrandissement d'une zone d'affichage correspondant à une direction de virage ou à un côté en approche ou à un changement de voie du véhicule (VH).

4. Système selon la revendication 1, dans lequel lesdits moyens de traitement sont configurés pour amener une ou plusieurs desdites zones de projection (1 à 3) à clignoter lorsqu'une destination est considérée comme atteinte par ledit système de navigation de véhicule.

5. Système selon l'une des revendications 1 à 3, comprenant en outre un système d'aide au changement de voie comprenant des moyens pour surveiller des voies latérales immédiatement adjacentes et des moyens pour décourager/empêcher un changement de voie lorsqu'un ou plusieurs autres véhicules arrivent de l'arrière et dans laquelle ledit système de vision comprend des moyens d'interface avec ledit système d'aide au changement de voie et dans laquelle lesdits moyens de traitement sont configurés pour générer un agrandissement et/ou un clignotement d'une ou des deux dites zones de projection latérales (1, 3) lorsque lesdits moyens pour décourager/empêcher un changement de voie sont activés.

6. Procédé de rétrovision pour aider à la conduite d'un véhicule (VH) au moyen d'un système de rétrovision selon l'une des revendications 1 à 5, comprenant les étapes suivantes
- prises de vue arrière au moyen desdites au moins trois caméras (C1, C2, C3),
- affichage d'au moins trois zones de projection (1, 2, 3) placées côte à côte horizontalement et correspondant à autant de prises de vue desdites au moins trois caméras (C1, C2, C3),
- commande de ladite projection pour maintenir des dimensions mutuelles desdites zones de projection (1 à 3) égales les unes aux autres selon une première condition de fonctionnement et
- commande de ladite projection pour modifier lesdites dimensions mutuelles desdites zones de projection afin d'obtenir des dimensions différentes les unes des autres, selon une seconde condition de fonctionnement,
dans laquelle ladite seconde condition de fonctionnement est activée en recevant des signaux d'un système de navigation de véhicule, signalant l'approche d'une position de virage ou d'un changement de voie.

7. Procédé selon la revendication 6, dans laquelle ladite seconde condition de fonctionnement est en outre activée par au moins une des conditions suivantes :
- activation d'un signal de virage par le conducteur,
- dépassement d'un angle de braquage prédéterminé, de préférence en combinaison avec une activation des freins du véhicule.

8. Programme informatique comprend des moyens de code de programme adaptés pour réaliser toutes les étapes de l'une des revendications 6 ou 7, lorsque ce programme est exécuté sur un ordinateur.

9. Moyens lisibles par ordinateur comprenant un programme enregistré, lesdits moyens lisibles par ordinateur comprenant des moyens de code de programme adaptés pour réaliser toutes les étapes de l'une des revendications 6 ou 7, lorsque ledit programme est exécuté sur un ordinateur.

10. Véhicule terrestre comprenant un système de rétrovision pour aider à la conduite d'un véhicule (VH) selon l'une quelconque des revendications 1 à 5.
